(19) **Europäisches Patentamt**

**European Patent Office**

**Office européen des brevets**

(11) Veröffentlichungsnummer: **0 333 999**
**A1**

(12) # EUROPÄISCHE PATENTANMELDUNG

(21) Anmeldenummer: **89101502.6**

(51) Int. Cl.⁴: **C08J 3/20 , C08L 21/00**

(22) Anmeldetag: **28.01.89**

(30) Priorität: **23.03.88 DE 3809710**

(43) Veröffentlichungstag der Anmeldung:
**27.09.89 Patentblatt 89/39**

(84) Benannte Vertragsstaaten:
**DE FR GB IT NL**

(71) Anmelder: **HÜLS AKTIENGESELLSCHAFT**
**Patentabteilung / PB 15 - Postfach 13 20**
**D-4370 Marl 1(DE)**

(72) Erfinder: **Tappe, Ralf, Dr.**
**Lilienthalstrasse 6**
**D-4270 Dorsten(DE)**

(54) **Verfahren zur Herstellung pulverförmiger, rieselfähiger Kautschuk-Füllstoff-Mischungen ausgehend von Kautschuk-Lösungen.**

(57) Bei den bisherigen Verfahren zur Herstellung von sogenannten Pulverkautschuken aus Kautschuk-Lösungen wurden immer diverse Hilfsmittel (Emulgatoren, Säuren, Metallsalze, Schutzkolloide) eingesetzt bzw. mußten aufwendige Fälltechniken, z. B. Einhaltung bestimmter pH-Wert-Bereiche, angewandt werden. Das neue Verfahren soll ohne Hilfsmittel und komplizierte Fällmethoden auskommen.

Der Füllstoff wird in einem organischen Lösemittel dispergiert, die Füllstoff-Dispersion mit einer Kautschuk-Lösung vermischt, die so gewonnene stabile kautschukhaltige Füllstoff-Dispersion in heißes, dispergierten Füllstoff enthaltendes und hohen Scherkräften ausgesetztes Wasser eingebracht, das organische Lösemittel gleichzeitig soweit wie möglich abdestilliert, nach beendeter Zugabe der kautschukhaltigen Füllstoff-Dispersion eine wäßrige Füllstoff-Dispersion zugefügt, die gefällte Kautschuk-Füllstoff-Mischung vom Wasser abgetrennt und unter ständiger Bewegung getrocknet.

Herstellung pulverförmiger, rieselfähiger Kautschuk-Füllstoff-Mischungen.

EP 0 333 999 A1

EP 0 333 999 A1

## Verfahren zur Herstellung pulverförmiger, rieselfähiger Kautschuk-Füllstoff-Mischungen ausgehend von Kautschuk-Lösungen

Im Gegensatz zur Fertigung von Formteilen aus thermoplastischen Kunststoffen erfordert die Verarbeitung des Rohstoffes Kautschuk zu Gummiartikeln einen komplexen Produktionsablauf, der mit einem hohen Aufwand an Zeit, Energie und Personal verbunden ist.

Die Zerkleinerung des ballenförmigen Rohkautschuks sowie die Vermischung mit Füllstoffen, Mineralölweichmachern und Vulkanisationsbeschleunigern erfolgt auf Walzen oder in Innenmischern. Durch die auftretende Friktionswärme muß dieser Mischprozeß diskontinuierlich in mehreren Stufen durchgeführt werden, wobei auch an die Zwischenlagerung der Mischungen besondere Anforderungen gestellt werden. Nach einer gegebenenfalls notwendigen Bearbeitung mit Kalandern oder Extrudern schließt sich als letzte Stufe die Vulkanisation in Pressen oder Autoklaven an.

Zur Umgehung dieser aufwendigen und umständlichen Kautschuk-Verarbeitung bieten sich rieselfähige, füllstoffhaltige Kautschuk-Pulver an. Durch deren Einsatz lassen sich Kautschuk-Mischungen wie thermoplastische Kunststoff-Pulver einfach, schnell und quasi on-line verarbeiten.

Verfahren zur Herstellung pulverförmiger, rieselfähiger Kautschuk-Füllstoff-Mischungen, vorzugsweise Kautschuk-Ruß-Mischungen auf der Basis von Allzweck-Kautschuken, sind schon seit einigen Jahren bekannt (DE-PS 21 35 266, DE-AS 22 14 121, DE-OSS 23 24 009, 23 25 550 und 23 32 796, sowie DE-PSS 24 39 237, 26 54 358 und 28 22 148).

Gemäß den in diesen Druckschriften beschriebenen Verfahren des Standes der Technik lassen sich aus Kautschuk-Emulsionen bzw. Kautschuk-Lösungen unter Verwendung von Emulgatoren (kationische, anionische oder nichtionogene oberflächenaktive Substanzen) und diversen Fällungshilfsmitteln (Säuren, Metallsalze, Schutzkolloide, etc.) durch ein-oder mehrstufige Prozeßvarianten pulverförmige, füllstoffhaltige Kautschuke, sogenannte Pulverkautschuke, herstellen.

Vom ökonomischen, ökologischen und verfahrenstechnischen Standpunkt aus betrachtet, weisen diese Verfahren jedoch gewisse Mängel auf:

1. Verwendung teurer Chemikalien, z. B. quaternärer Ammoniumsalze oder Alkylamin-alkoxylate.
2. Umweltbelastung durch elektrolythaltige Abwässer.
3. Teilweise aufwendige Fälltechniken, z. B. Einhaltung bestimmter pH-Wert-Bereiche.
4. Korrosionsgefahr bei der Anwendung saurer Fällmedien, gegebenenfalls verbunden mit kostenintensiven Produktionsstillständen.

Weitere Aspekte sind die in den Kautschuk eingemischten Anteile an Emulgatoren und Hilfsmitteln, die sich negativ auf das Eigenschaftsbild der Produkte auswirken können.

Man hat bereits versucht, eine Grundmischung aus einem Polymer und Ruß in der Weise herzustellen (DE-OS 21 47 429), daß man eine Aufschlämmung von Ruß in einem wäßrigen oder organischen Lösemittel mit einer Lösung des Polymeren in einem inerten organischen Lösemittel mischt, dieses Gemisch in innige Berührung mit einem Gasstrom solcher Temperatur und Geschwindigkeit bringt, daß das Gemisch angesaugt, getrocknet und die entstandene Grundmischung abgetrennt wird. Nach einem anderen Verfahren des Standes der Technik (DE-OS 21 54 422) wird ein Teil der in einer flüssigen Mischung eines Elastomeren enthaltenen flüchtigen Stoffe unter definierten Bedingungen (Dampfgeschwindigkeit 3 bis 70 m/sec) blitzartig in Dampf überführt. Beide Verfahren ergeben jedoch krümelige, nicht rieselfähige Produkte.

Schließlich wird bei dem Verfahren gemäß DE-OS 22 60 340 die durch Polymerisation von Butadien oder Copolymerisation von Butadien mit Styrol in Gegenwart von Lithium-Katalysatoren erhaltene Kautschuk-Lösung mit einer Füllstoff-Dispersion vermischt, diese fließfähige Mischung vorzugsweise auf 100 bis 200 °C aufgeheizt und sodann von einem höheren gegen einen niedrigeren Druck entspannt, wobei die organische Flüssigkeit blitzartig verdampft und die Kautschuk-Füllstoff-Mischung als rieselfähiges, nicht verbackendes Pulver anfällt. Dieser Prozeß eignet sich in erster Linie für die Verarbeitung der aus adiabatischen Polymerisationen gewonnenen heißen Kautschuk-Lösungen. Für den Fall, daß nach beendeter Polyreaktion Füllstoff-Dispersion und Kautschuk-Lösung entsprechend erhitzt werden müssen, bietet diese Variante aufgrund der anfallenden Energiekosten sowie der zusätzlichen thermischen Belastung des Kautschuks keine Vorteile.

Angesichts der aufgezeigten Nachteile bei dem Verfahren des relevanten Standes der Technik bestand die Aufgabe der vorliegenden Erfindung darin, ein Verfahren zu entwickeln, welches möglichst einfach, kostengünstig und unter Ausschluß unerwünschter Fremdsubstanzen pulverförmigen, rieselfähigen, füllstoffhaltigen Kautschuk liefert.

Diese Aufgabe wurde durch die in den Patentansprüchen beschriebenen Maßnahmen gelöst.

2

Für das erfindungsgemäße Verfahren geeignete Kautschuk-Lösungen sind vorzugsweise solche, die bei der Lösungspolymerisation von Dienen allein oder in Kombination mit Vinylaromaten nach bekannten Verfahren des Standes der Technik anfallen, beispielsweise Lösungen von Polybutadienen, Polyisoprenen, Polymethylpentadienen, Copolymerisaten aus Butadien und Styrol, Copolymerisaten aus Butadien und Isopren, Copolymerisaten aus Isopren und Styrol, Terpolymeren aus Butadien, Isopren und Styrol, Ethylen-Propylen-Copolymerisaten, Ethylen-Propylen-Dien-Terpolymerisaten und Polyalkenameren, die durch ringöffnende Polymerisation von Cycloolefinen hergestellt werden.

Als Initiatoren werden bei diesen Lösungs-Polymerisationen in Abhängigkeit von den Monomeren und den Eigenschaften des Kautschukes metallorganische Verbindungen, zum Beispiel Ziegler-, Lithium- oder Alfin-Katalysatoren, verwendet.

Geeignete Lösemittel, die bei der Lösungspolymerisation eingesetzt oder zur Auflösung eines nicht durch Lösungspolymerisation erhaltenen Kautschuks verwendet werden, sind in erster Linie aliphatische, alicyclische und aromatische Kohlenwasserstoffe mit einem Siedepunkt unter 100 °C, z. B. Pentan, Hexan, Heptan, Cyclohexan oder Benzol. Desweiteren können Lösemittel mit einem Siedepunkt über 100 °C, z. B. Toluol, eingesetzt werden, wenn die Ausfällung der Kautschuk-Füllstoff-Mischung bei einem entsprechendem Unterdruck und unter Nachdosierung des mit dem Lösemittel abdestillierten Wassers durchgeführt wird.

Nach dem erfindungsgemäßen Verfahren lassen sich auch pulverförmige, füllstoffhaltige Kautschuke herstellen, die nicht nur einen einzigen Kautschuk, sondern Mischungen zweier oder mehrerer Kautschuke enthalten. Dazu werden entweder die Lösungen verschiedener Kautschuke miteinander vermischt oder mehrere Kautschuke in einem Lösemittel oder Lösemittelgemisch aufgelöst.

Bevorzugt werden bei dem erfindungsgemäßen Verfahren Kautschuke eingesetzt, die in einem der oben angeführten Lösemittel hergestellt und sogleich in Form der nach Abstoppen der Polymerisation und Stabilisierung anfallenden Lösung verwendet werden können.

Der Feststoffgehalt der Kautschuk-Lösungen, wie sie beim vorliegenden Verfahren eingesetzt werden können, beträgt im allgemeinen 5 bis 35 %.

Als Füllstoffe kommen vorzugsweise die in der Kautschuk-Industrie gebräuchlichen Ruße sämtlicher Aktivitätsstufen in Frage, zum Beispiel SAF-, ISAF-, HAF-Ruße einschließlich deren Abwandlungen FEF-, GPF-, SPF-, ARF- und MT-Ruße. Es können auch mineralische Substanzen, zum Beispiel Kieselsäure (SiO$_2$), eingearbeitet werden.

Die einzusetzende Menge an Ruß oder mineralischen Füllstoffen kann von 30 Gewichtsteilen bis zu 300 Gewichtsteilen pro 100 Gewichtsteile Kautschuk (pphr), vorzugsweise 50 Gewichtsteile bis 150 Gewichtsteile auf 100 Gewichtsteile Kautschuk betragen.

Zur Herstellung der kautschukhaltigen Füllstoff-Dispersion wird ein Teil der für das Endprodukt vorgesehenen Füllstoffmenge, im allgemeinen 40 bis 95 %, in einem der bereits erwähnten Lösemittel, bevor zugt in dem Kautschuk-Lösemittel, aufgeschlämmt und mit einem handelsüblichen Dispergiergerät (z. B. ULTRA-TURRAX) solange dispergiert, bis die Füllstoff-Partikel einen mittleren Korndurchmesser unter 20 μm aufweisen

Die stabile, lagerfähige, kautschukhaltige Füllstoff-Dispersion erhält man durch Verrühren der Kautschuk-Lösung mit der Füllstoff-Dispersion, wobei für das erfindungsgemäße Verfahren kautschukhaltige Füllstoff-Dispersionen geeignet sind, die 2 bis 30 Gewichtsanteile Kautschuk, vorzugsweise 5 bis 13 Gewichtsanteile Kautschuk, enthalten.

Vor der Ausfällung der Kautschuk-Füllstoff-Mischung wird wiederum ein Teil der für das Endprodukt vorgesehenen Füllstoffmenge, im allgemeinen 3 bis 50 %, in soviel Wasser dispergiert, daß eine 0,001 bis 0,5 %ige wäßrige Füllstoff-Dispersion als Fällbad vorliegt.

Zur Ausfällung der Kautschuk-Füllstoff-Mischung und zur Abtrennung des organischen Lösungsmittels wird die kautschukhaltige Füllstoff-Dispersion allein oder simultan mit einer wäßrigen Füllstoff-Dispersion, die bis zu 50 % des gesamten Füllstoffes enthält, dem beheizten Fällbad zugeführt. Vor und während des Fällprozesses wird eine Temperatur eingehalten, die in der Nähe des Siedepunktes des (der) zu entfernenden organischen Lösemittel(s) liegt. Das Fällbad wird mit einem stark scherenden Rotor-Stator-System (z. B. ULTRA-TURRAX) gerührt, um zum einen eine optimale Verteilung der kautschukhaltigen Füllstoff-Dispersion im Fällmedium und damit eine rasche Verdampfung des organischen Lösungsmittels zu erzielen. Zum anderen wird durch die Drehzahl des Rotor-Stator-Systems die Korngrößenverteilung der sich ergebenden rieselfähigen Kautschuk-Füllstoff-Mischung bestimmt. Maßgebend für die Dispergierwirkung ist der Schergradient, der bei Rotor-Stator-Systemen durch die Umfangsgeschwindigkeit und durch die Spaltbreite variiert werden kann. Bei einer Spaltbreite von 2 mm liegt die optimale Umfangsgeschwindigkeit im Bereich von 5 bis 20 m/s. Im Anschluß an die kautschukhaltige Füllstoff-Dispersion wird dem Fällbad abschließend eine wäßrige Füllstoff-Dispersion zugeführt, die 2 bis 10 % des gesamten Füllstoffes enthält.

3

Danach wird zweckmäßigerweise der gesamte Ansatz bis zu 20 Minuten bei einer Temperatur oberhalb des Siedepunk tes des verwendeten Lösemittels bzw. Lösemittelgemisches gerührt. Abschließend wird das Fällbad abgekühlt, vorzugsweise auf 20 bis 30 °C, die Kautschuk-Füllstoff-Mischung vom Wasser, z. B. durch Filtrieren, abgetrennt und unter ständiger Bewegung getrocknet.

Das erfindungsgemäße Verfahren ermöglicht es, in besonders einfacher Weise rieselfähige, füllstoffhaltige Kautschuk-Pulver herzustellen, aus denen dann in weiteren Verfahrensschritten vulkanisierbare Mischungen und letztendlich Vulkanisate, wie z. B. Reifenlaufflächen und Dichtungsprofile, entstehen.

Das Verfahren wird anhand der nachfolgenden Beispiele näher erläutert.

Sofern nicht anders angegeben, handelt es sich bei den Prozentangaben um Gewichtsprozente.

Beispiel 1

Als Kautschuk wird ein durch Lösungspolymerisation erhaltenes Ethylen-Propylen-Ethylidennornornen-Terpolymerisat (BUNA[R] AP 341 der Bunawerke Hüls GmbH) in Form einer 14,3 %igen hexanischen Lösung eingesetzt. 1 050 g dieser Kautschuklösung werden zunächst mit einer Füllstoff-Dispersion, die aus 60 g - 40 pphr Ruß (CORAX N 539) und 440 g Hexan durch 10 minütiges Dispergieren hergestellt wurde, verrührt.

Zur Herstellung einer wäßrigen Füllstoff-Dispersion werden weitere 15 g - 10 pphr Ruß in 205 g Wasser 10 Minuten dispergiert. In einem 7 l-Fällbehälter mit Rührwerk, Tropftrichter und Destillationsbrücke werden 4 000 g Wasser und 110 g der wäßrigen Ruß-Dispersion (5 pphr Füllstoff) vorgelegt und über ein Wasserbad auf 80 °C aufgeheizt. Zur Ausfällung der Kautschuk-Füllstoff-Mischung läßt man die vorher hergestellte kautschukhaltige Ruß-Dispersion innerhalb von 2 Stunden über einen Tropftrichter dem Fällbad kontinuierlich zufließen. Während des Fällprozesses wird im Fällbad ein Rotor-Stator-Rührwerk (ULTRA-TURRAX, Spaltbreite 2 mm) mit 4 000 Umdrehungen/Minute (U/min) betrieben; die Fälltemperatur wird zwischen 75 und 80 °C gehalten. Dann werden die restlichen 110 g der wäßrigen Ruß-Dispersion (5 pphr Füllstoff) ins Fällbad nachdosiert.

Zwecks weiterer Abtrennung des als Lösemittel verwendeten Hexans wird der gesamte Ansatz 15 Minuten auf 85 °C erhitzt und anschließend bei einer Drehzahl des Rotor-Stator-Rührwerks von 1 000 U/min innerhalb von 30 Minuten auf Raumtemperatur (ca. 22 °C) abgekühlt. Das gefällte Produkt wird dann vom Wasser durch Filtration abgetrennt und im Wirbelbett ca. 2 Stunden bei 40 °C getrocknet. Man erhält eine pulverförmige, rieselfähige Kautschuk-Füllstoff-Mischung.

Beispiele 2 bis 8

In der im Beispiel 1 beschriebenen Art und Weise werden weitere pulverförmige, rieselfähige Kautschuk-Füllstoff-Mischungen hergestellt. Geändert gegenüber dem Beispiel 1 sind lediglich Art und Menge der Einsatzstoffe bzw. ggf. deren Verteilung auf die einzelnen Stoffströme.

Im einzelnen werden folgende Kautschuke (K) in hexanischer Lösung eingesetzt:

| Abkürzung | Art des Kautschuks | Charakterisierung des Kautschuks |
|-----------|--------------------|----------------------------------|
| K 1 | Ethylen-Propylen-Ethyliden-norbornen-Terpolymerisat (BUNA AP 341) | Mooney-Viskosität ML 1 + 4 (100 °C) : 70 |
| K 2 | Polybutadien (BUNA VI) | 50% Vinylgehalt |
| K 3 | Butadien-Isopren-Styrol-Blockpolymerisat (VESTOGRAL) | Block A: 60 Teile (Tle.) Butadien Block B: 13 Tle. Butadien, 16 Tle. Isopren, 11 Tle. Styrol |
| K 4 | Polyisopren (VESTOGRIP) | 60 % Vinylgehalt |

Dazu kommen die folgenden Füllstoffe (F):
F 1 (CORAX N 539), F 2 (CORAX N 339) und F 3 (CORAX N 234).

In der nachfolgenden Tabelle sind die einzelnen charakteristischen Verfahrensmerkmale zusammengestellt:

Tabelle

| Beispiel-Nr. | Art des | | Kautschukhaltige Füllstoff-Dispersion | | | | Wäßrige Füllstoff-Dispersion | | Aufteilung der wäßrigen Füllstoff-Dispersion | |
|---|---|---|---|---|---|---|---|---|---|---|
| | Kautschuks | Füllstoffs | Kautschuk-Lösung | | Füllstoff-Dispersion | | Wasser (g) | Füllstoff (g) | Vorlage (g) | Nachdosierung (g) |
| | | | Masse (g) | Kautschuk (%) | Hexan (g) | Füllstoff (g) | | | | |
| 2 | K 1 | F 1 | 1 050 | 14,3 | 1 200 | 165 | 105 | 15 | 60 | 60 |
| 3 | K 2 | F 2 | 761 | 19,7 | 760 | 90 | 205 | 15 | 110 | 110 |
| 4 | K 2 | F 2 | 259 | 19,3 | 1 315 | 135 | 385 | 15 | 200 | 200 |
| 5 | K 3 | F 1 | 424 | 17,7 | 220 | 30 | 180 | 7,5 | 94,5 | 93 |
| 6 | K 3 | F 2 | 424 | 17,7 | 200 | 15 | 200 | 7,5 | 104,5 | 103 |
| 7 | K 4 | F 2 | 401 | 18,7 | 250 | 23 | 280 | 22 | 250 | 52 |
| 8 | K 4 | F 3 | 802 | 18,7 | 1 310 | 165 | 205 | 15 | 110 | 110 |

EP 0 333 999 A1

Beispiel 9

Als Kautschuk wird ein durch Lösungspolymersation (Li-Katalyse) erhaltenes Polyisopren mit einem Vinylgehalt von ca. 60 % (VESTOGRIP) in Form einer 18,7 %igen hexanischen Lösung eingesetzt. 401 g dieser Kautschuk-Lösung werden mit einer Füllstoff-Dispersion, die durch 10 minütiges Dispergieren von 22,5 g - 30 pphr Ruß (CORAX N 339) erhalten wurde, verrührt.

Zur Herstellung einer wäßrigen Füllstoff-Dispersion werden 22,5 g Ruß (30 pphr) in 280 g Wasser 10 Minuten dispergiert. In einem 7 l-Fällbehälter mit Rührwerk, Tropftrichter und Destillationsbrücke werden 4 000 g Wasser mit 50 g der wäßrigen Ruß-Dispersion (5 pphr Füllstoff) vorgelegt und auf 80 °C erhitzt. Dann läßt man die kautschukhaltige Ruß-Dispersion sowie 202,5 g der wäßrigen Ruß-Dispersion (20 pphr Füllstoff) innerhalb von 2 Stunden dem Fällbad simultan, aber getrennt voneinander, zufließen. Während des Fällprozesses wird im Fällbehälter ein Rotor-Stator-Rührwerk (ULTRA-TURRAX, Spaltbreite 2 mm) mit 4 000 U/min betrieben; die Fälltemperatur wird zwischen 75 und 80 °C gehalten. Anschließend werden 50 g der wäßrigen Ruß-Dispersion nachdosiert.

Zur weiteren Abtrennung des als Hexan eingesetzten Lösemittels wird der gesamte Ansatz sodann 15 Minuten auf 85 °C erhitzt und anschließend bei einer Drehzahl des Rotor-Stator-Rührers von 1 000 U/min innerhalb von 30 Minuten auf Raumtemperatur abgekühlt. Das gefällte Produkt wird durch Filtrieren vom Wasser abgetrennt und im Wirbelbett 2 Stunden bei 40 °C getrocknet. Man erhält eine pulverförmige, rieselfähige Polyisopren-Ruß-Mischung.


**Ansprüche**

1. Verfahren zur Herstellung pulverförmiger, rieselfähiger Kautschuk-Füllstoff-Mischungen durch Vereinigung einer Füllstoff-Dispersion mit einer Kautschuk-Lösung, Ausfällen und Trocknen der Kautschuk-Füllstoff-Mischung,
dadurch gekennzeichnet,
daß man den Füllstoff in einem organischen Lösemittel dispergiert, diese Dispersion mit einer Kautschuk-Lösung vermischt, die so gewonnene stabile kautschukhaltige Füllstoff-Dispersion in heißes, dispergierten Füllstoff enthaltendes und hohen Scherkräften ausgesetztes Wasser einbringt, das organische Lösemittel gleichzeitig soweit wie möglich abdestilliert, nach beendeter Zugabe der kautschukhaltigen Füllstoff-Dispersion eine wäßrige Füllstoff-Dispersion zufügt, die gefällte Kautschuk-Füllstoff-Mischung vom Wasser abtrennt und unter ständiger Bewegung trocknet.

2. Verfahren nach Anspruch 1,
dadurch gekennzeichnet,
daß man simultan mit der kautschukhaltigen Füllstoff-Dispersion eine wäßrige, kautschukfreie Füllstoff-Dispersion dem hohen Scherkräften ausgesetzten Fällbad zuführt.

Europäisches Patentamt

# EUROPÄISCHER RECHERCHENBERICHT

Nummer der Anmeldung

EP 89 10 1502

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 209 781 (HÜLS) <br> * Anspruch 1 * & DE-A-2 260 340 (Kat. D) <br> --- | | C 08 J 3/20 <br> C 08 L 21/00 |
| A | FR-A-2 426 061 (HÜLS) <br> * Anspruch 1 * & DE-A-2 822 148 (Kat. D) <br> ----- | | |

**RECHERCHIERTE SACHGEBIETE (Int. Cl.4)**

C 08 J
C 08 L

Der vorliegende Recherchenbericht wurde für alle Patentansprüche erstellt

| Recherchenort | Abschlußdatum der Recherche | Prüfer |
|---|---|---|
| DEN HAAG | 28-06-1989 | VAN HUMBEECK F.W.C. |

EPO FORM 1503 03.82 (P0403)